Europäisches Patentamt

**European Patent Office**

**Office européen des brevets**

(19)

(11) Numéro de publication : **0 004 486**
**B1**

(12) **FASCICULE DE BREVET EUROPÉEN**

(45) Date de publication du fascicule du brevet :
**11.02.81**

(51) Int. Cl.³ : **G 02 B   5/16, H 01 B 11/00**

(21) Numéro de dépôt : **79400090.1**

(22) Date de dépôt : **12.02.79**

(54) **Elément de câble à fibres optiques et utilisation de tels elements.**

(30) Priorité : **08.03.78 FR 7806598**

(43) Date de publication de la demande :
**03.10.79 (Bulletin 79/20)**

(45) Mention de la délivrance du brevet :
**11.02.81 Bulletin 81/06**

(84) Etats contractants désignés :
**BE CH DE GB IT**

(56) Documents cités :
   **DE - A - 2 507 648**
   **DE - A - 2 509 547**
   **DE - A - 2 511 019**
   **DE - A - 2 519 050**
   **DE - A - 2 615 312**
   **FR - A - 2 200 535**
   **FR - A - 2 358 666**

(73) Titulaire : **LIGNES TELEGRAPHIQUES ET TELEPHO-
NIQUES Société anonyme
89 Rue de la Faisanderie
F-75782 Paris Cedex 16 (FR)**

(72) Inventeur : **Arnaud, Maurice S.A. LIGNES TELEGRA-
PHIQUES
ET TELEPHONIQUES 89 Rue de la Faisanderie
F-75782 Paris Cedex 16 (FR)**
Inventeur : **Chiron, Bernard S.A. LIGNES TELEGRA-
PHIQUES
ET TELEPHONIQUES 89 Rue de la Faisanderie
F-75782 Paris Cedex 16 (FR)**
Inventeur : **Gallachi, Claude S.A. LIGNES TELEGRA-
PHIQUES
ET TELEPHONIQUES 89 Rue de la Faisanderie
F-75782 Paris Cedex 16 (FR)**
Inventeur : **Hulin, Jean-Pierre S.A. LIGNES TELEGRA-
PHIQUES
ET TELEPHONIQUES 89 Rue de la Faisanderie
F-75782 Paris Cedex 16 (FR)**
Inventeur : **de Vecchis, Michel S.A. LIGNES TELE-
GRAPHIQUES
ET TELEPHONIQUES 89 Rue de la Faisanderie
F-75782 Paris Cedex 16 (FR)**

(74) Mandataire : **Guyot, Liliane
S.C.P.I Thomson-CSF 173, Boulevard Haussmann
F-75360 Paris Cedex 08 (FR)**

Imprimerie Jouve, 17, rue du Louvre, 75001 Paris, France

## Elément de câble à fibres optiques et utilisation de tels éléments

La présente invention concerne les câbles à fibres optiques utilisables en télécommunication et dans toute liaison occupant une très large bande de fréquences. L'utilisation de fibres optiques, comme guide d'ondes optiques modulées par l'information à transmettre, tend à augmenter, et bien qu'elle soit freinée par le prix des fibres elles-mêmes, il est raisonnable d'estimer que les progrès industriels qui seront faits dans les quelques prochaines années permettront une réduction du prix des fibres qui rendra le prix des câbles les incorporant compétitif avec celui des câbles conventionnels à forte capacité et de haute qualité.

L'utilisation des fibres optiques pose aux câbliers des problèmes nouveaux par suite notamment de la fragilité des fibres et de la sensibilité de leurs caractéristiques de transmission aux contraintes mécaniques.

La titulaire a décrit, notamment dans la demande de brevet français déposée le 18 Février 1977 pour « Elément de câble incorporant des fibres optiques », un élément de câble comportant un support constitué d'un ou plusieurs fils en un matériau mécaniquement rigide dont l'allongement est supérieur à celui du matériau constituant la fibre optique, sur lequel est extrudé un revêtement diélectrique portant à sa surface un groupe de rainures hélicoïdales abritant une fibre optique et dans lequel l'ouverture des rainures vers l'extérieur est, au moins partiellement, refermée par des lèvres de façon à empêcher la sortie de la fibre et à protéger celle-ci de tout contact au cours des opérations ultérieures. La présente invention s'applique à un tel élément de câble simplifié à rainures sans lèvres.

La présente invention a pour objet un élément de câble à fibres optiques comportant un support mécanique métallique entouré d'un revêtement diélectrique cylindrique portant des rainures hélicoïdales, au plus une fibre optique dans chaque rainure, au moins un rubanage hélicoïdal autour du support, caractérisé en ce que le profil des rainures est en forme de V curviligne, la concavité des flancs étant dirigée vers la périphérie de sorte que la fibre est maintenue à l'écart du fond de la rainure et ondule entre les flancs de celle-ci.

Dans un mode de réalisation particulier de l'invention, la fibre optique est soumise à une torsion comprise par exemple entre 3 et 10 tours par mètre de longueur au moment de sa pose dans la rainure.

Ainsi, ces caractéristiques de l'élément de câble selon l'invention ont pour effet de permettre l'introduction dans chaque rainure d'une longueur de fibre supérieure à la longueur développée du fond de la rainure de sorte que la fibre forme des ondulations entre les deux flancs des rainures ce qui diminue la surface de contact à des zones discontinues. La réduction des zones de contact permet un découplage mécanique des fibres et du support permettant de soumettre celui-ci à des contraintes qui, si elles étaient transmises aux fibres, provoqueraient une réduction de leurs performances électriques. Par exemple, cette réserve de longueur de fibre permet d'exercer sur l'élément de câble une traction qui n'est pas transmise à la fibre, ce qui permet entre autres, de réduire le diamètre des tourets servant à l'emmagasinage desdits éléments.

L'élément de câble selon l'invention a également pour avantage de permettre l'introduction d'un nombre maximal de fibres dans un câble de dimension donnée et plus particulièrement de dimensions dont les valeurs ont été normalisées par les Administrations parce que compatibles avec celles des conduites, également normalisées, dans le cas de pose souterraine.

De plus, un tel élément de câble à fibres optiques peut être transformé en câble par des machines de câblerie couramment utilisées à la fabrication des câbles conventionnels à conducteurs métalliques. Un tel élément de câble à fibres optiques présente un intérêt économique certain puisqu'il permet la fabrication de câbles à fibres optiques par une câblerie équipée, sans nouvel investissement.

L'invention sera bien comprise en se rapportant à la description suivante et aux figures qui l'accompagnent données à titre d'exemple non limitatif et dans lesquelles :

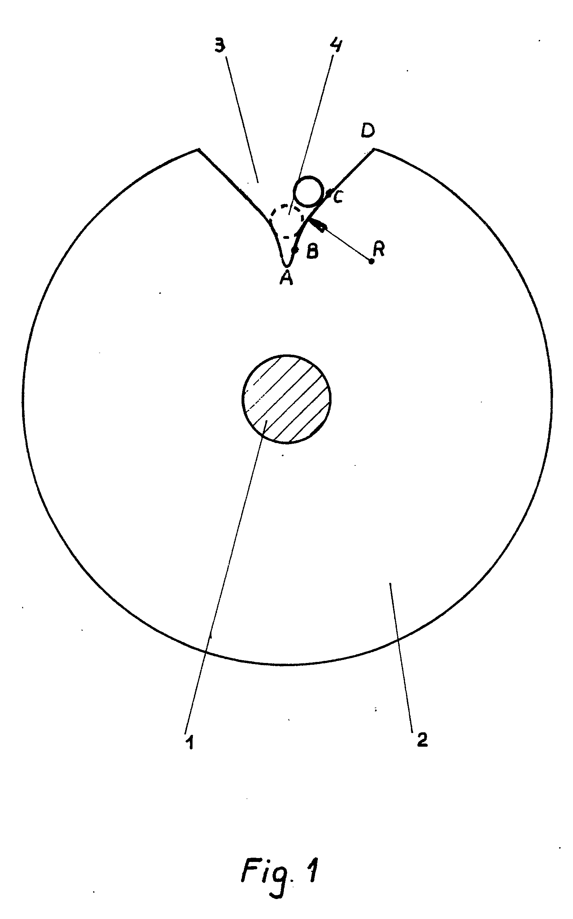

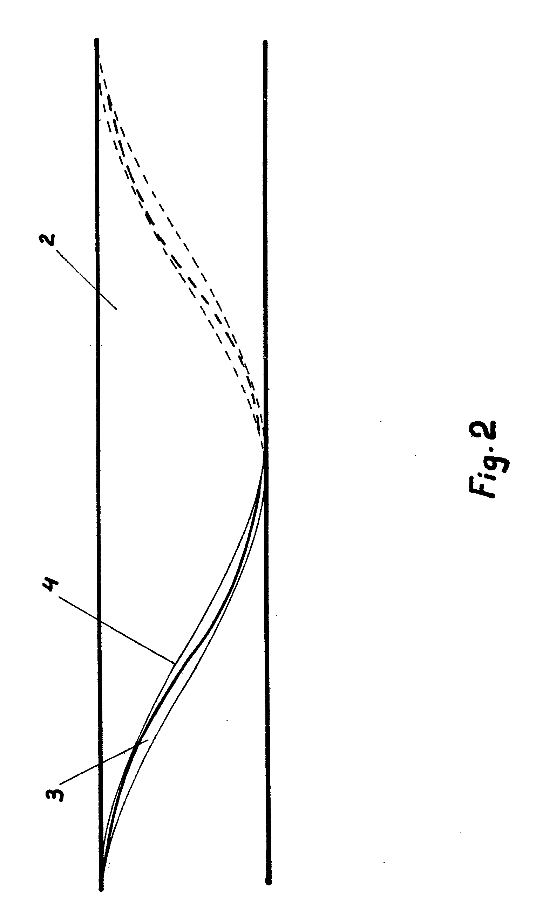

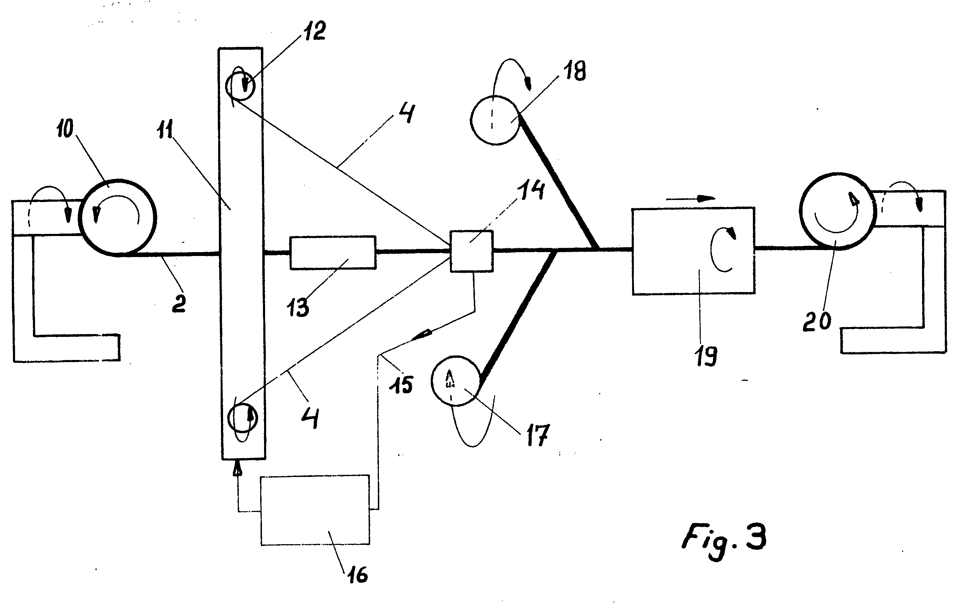

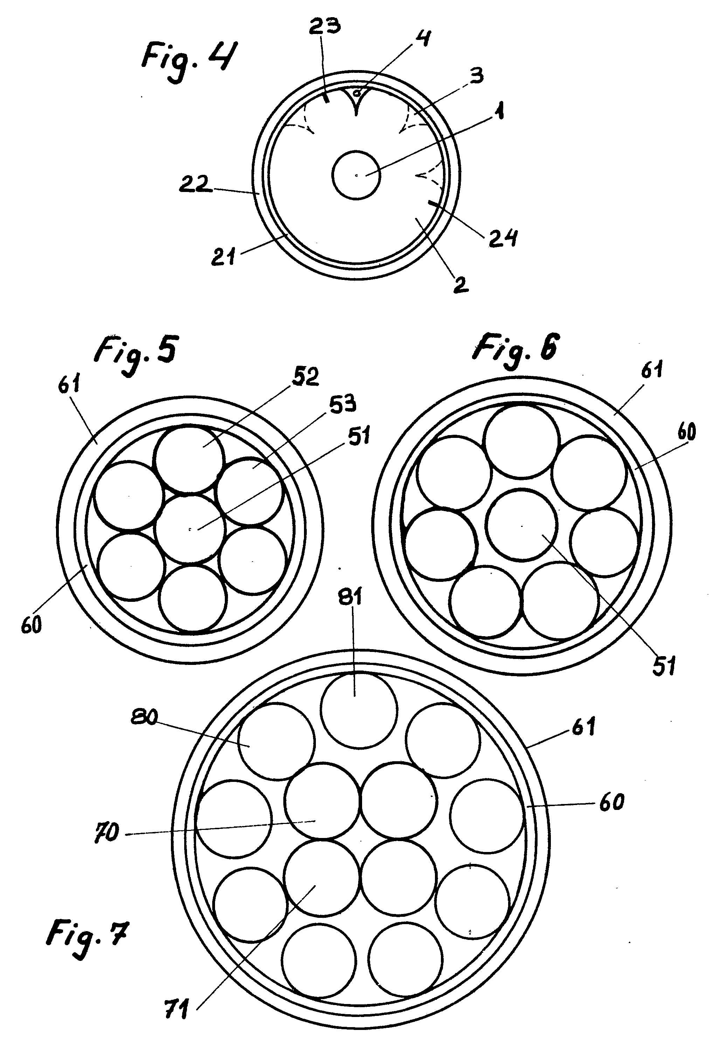

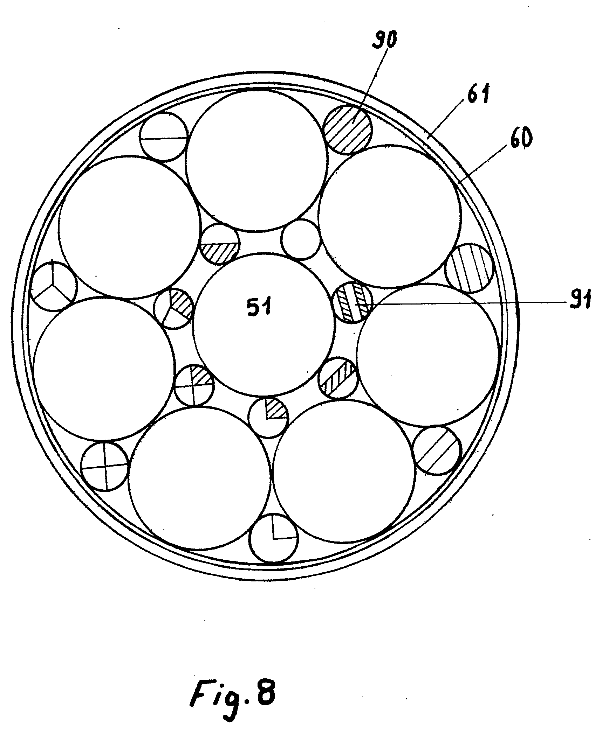

La figure 1 est une vue en coupe radiale à grande échelle du support mécanique et du revêtement diélectrique portant les rainures, destinée à mettre en évidence le profil d'une rainure ; la figure 2 est une vue de dessus montrant la position d'une fibre dans une rainure ; la figure 3 est un schéma synoptique d'une ligne de fabrication d'un tel élément ; la figure 4 est une vue en coupe d'un élément de câble ; les figures 5, 6 et 7 représentent des coupes de câbles réalisés à partir de l'élément de la figure 4 ; la figure 8 représente une vue en coupe de câble composite.

On a représenté en 1 sur la figure 1 le support mécaniquement rigide d'un élément de câble selon l'invention. Il peut être constitué d'un ou plusieurs fils d'acier type corde à piano ou de fibres organiques. Autour de ce support est extrudé un revêtement 2 en polyéthylène de moyenne densité dans lequel est prévu un certain nombre, par exemple huit, de rainures, telles 3, disposées en hélices parallèles sur la surface du revêtement 2. Ces rainures peuvent être obtenues directement au cours de l'extrusion de 2 ou ultérieurement par usinage d'une structure cylindrique, par exemple ainsi qu'il est décrit dans la demande de brevet français déposée le 4 Janvier 1978 par la titulaire pour « Procédé d'usinage en continu de support pour guides d'ondes électromagnétiques ».

Ainsi qu'il apparaît, le profil des rainures en V, symétrique par rapport à un rayon de l'élément de câble, présente des flancs dont une fraction BC est courbe, ainsi qu'il est représenté par le rayon de courbure R. Dans un exemple de réalisation de rainures de profondeur 400 à 600 μm, la valeur de

R est d'environ 1 mm. La courbure des flancs diminue la surface de contact entre la fibre 4 et le revêtement cylindrique 2 si la fibre est empêchée de tomber au fond de la rainure (cf section en trait interrompu) où elle se trouve en contact avec les deux flancs. Le profil courbe des flancs de rainures assure une augmentation de la poussée radiale centrifuge résultant sur la fibre 4 de toute contrainte exercée sur l'élément de câble. De telles contraintes se développent notamment lors du rubanage qui suit la pose des fibres en vue d'obturer l'ouverture des rainures et lors d'extrusions ultérieures de gaines protectrices. Le déplacement de la fibre vers la périphérie où la rainure est plus ouverte favorise grâce à l'amplitude des ondulations d'un flanc à l'autre, l'absorption d'un excès de longueur relativement important. L'expérience montre que lorsqu'on coupe un tel élément, les fibres dépassent de quelques centimètres du plan de coupe. L'expérience a montré qu'une ouverture du V voisine ou inférieure à 60 degrés est préférable. De même dans le cas d'éléments rubanés après pose des fibres optiques, une profondeur du V égale à environ cinq fois le diamètre de la fibre donne de bons résultats.

La figure 2 est une vue de dessus de l'élément incomplet vu en coupe sur la fig. 1. On reconnaît le revêtement 2 muni d'une rainure hélicoïdale 3 dans laquelle est placée une fibre 4. Dans un mode de réalisation particulier de l'invention, la longueur de la fibre 4 est supérieure à la longueur de l'hélice constituant la rainure 3 de sorte que la fibre oscille d'un flanc à l'autre de la rainure sans aller au fond de celle-ci. La position limite de la fibre au fond de la rainure est représentée en pointillé sur la fig. 1. On voit très clairement sur cette figure que la surface de contact entre la fibre et son support est ainsi divisée par un facteur supérieur à deux, ce qui est favorable à la réduction des pertes dans la fibre. Cette position de la fibre, due à un excès de longueur, est obtenue, par exemple, ainsi qu'il est représenté sur la figure 3.

La figure 3 représente schématiquement une ligne de fabrication d'un élément de câble comportant un double rubanage. On a figuré en 10 un départ tournant du support entouré d'un revêtement, préalablement usiné, étant entendu que l'usinage du support peut être fait en continu sur un poste de travail disposé entre le départ 10 d'un jonc lisse et le plateau 11 portant les bobines de fibres optiques, telles 12. Le plateau est fixe. Les bobines 12 sont animées d'un mouvement de rotation perpendiculairement à leur axe, ainsi qu'il est représenté par les flèches, de façon à assurer la torsion de la fibre pendant son introduction dans la rainure. On a figuré en 13 un guide centrant le support entouré du revêtement par rapport à la tête 14 de pose des fibres optiques. Cette tête est, par exemple, du type décrit dans la demande de brevet français déposée le 1er Mars 1978 par la titulaire pour « Perfectionnements à la fabrication d'éléments de câblage comportant des fibres optiques ». Le centrage des guides fibres de la tête 14 est assuré par un capteur non représenté commandant, par l'intermédiaire du conducteur 15 et de l'organe moteur 16, la position angulaire du plateau 11. Deux têtes à rubaner 17 et 18 assurent la mise en place des rubans autour de l'élément de câble qui est entraîné par un dispositif de tirage tournant 19 et emmagasiné sur la bobine réceptrice tournante 20.

La fabrication de l'élément de câble peut également être assurée en faisant tourner le plateau 11 autour du support de fibres défilant en translation. Dans ces conditions, si l'axe des bobines est fixe par rapport au plateau de façon qu'elles assurent uniquement le déroulement de la fibre, celle-ci reçoit une torsion d'un tour par tour du plateau 11, ce qui correspond à un pas de l'hélice des rainures 3. Dans certains cas, cette torsion est suffisante et la pose sur support défilant en translation peut être préférée à la pose sur support tournant pour sa simplicité. La tension sur les bobines 12 doit être soigneusement limitée de façon à ne pas créer de déséquilibre et surtout à permettre la torsion des fibres optiques. Pratiquement, dans une ligne réalisée par la titulaire, la torsion sur les fibres est maintenue à une valeur inférieure à 50 g.

La figure 4 est une vue en coupe d'un élément de câble tel qu'il est obtenu à la sortie de la ligne de fabrication représentée sur la figure 3. On reconnaît en 1 le support central rigide entouré du revêtement diélectrique 2 présentant des rainures hélicoïdales 3 dans lesquelles ont été disposées les fibres optiques 4. Les deux rubanages sont figurés respectivement en 21 et 22. On a volontairement limité la représentation à une rainure 3 et à l'esquisse de trois autres rainures, le nombre de celles-ci dépendant du type de câble à fabriquer. Afin de faciliter le repérage des différentes fibres 4 sur leur support, il est prévu de réaliser sur celui-ci deux repères, tels 23 et 24 disposés sur des diamètres différents. Ces repères peuvent se présenter sous la forme d'une entaille réalisée sur le revêtement diélectrique, soit au cours de l'extrusion, soit au cours de l'usinage donnant naissance aux rainures hélicoïdales. Dans d'autres variantes, ces repères se présentent sous la forme de dessins imprimés à la surface du revêtement diélectrique.

Les figures 5, 6 et 7 représentent des câbles obtenus par assemblage d'éléments du type présenté sur la figure 4. La réalisation de la figure 5 représentant un élément central 51 entouré d'une couche de six éléments 52, 53... etc... correspond, ainsi qu'il est connu, au meilleur coefficient de remplissage en volume d'une enveloppe de diamètre donné. Cette enveloppe, par exemple métallique, est représentée en 60, et est protégée par une gaine 61, ainsi qu'il est bien connu.

La disposition particulière des fibres optiques à la périphérie du support entouré du revêtement conduit à des résultats relatifs au nombre de conducteurs maximum utilisables dans un câble de diamètre donné qui différent des résultats obtenus lorsque les conducteurs sont métalliques. On dispose, en effet, d'une variable supplémentaire constituée par le nombre de fibres optiques disposées sur le support de diamètre donné et plus précisément sur le rapport entre le diamètre du support et du nombre de rainures servant de logement à une fibre optique. Une étude portant sur le coefficient de remplissage total, c'est-à-dire le nombre total de fibres optiques que l'on peut loger dans un câble de diamètre déterminé, a conduit au résultat suivant qui montre que le câble : un élément central associé à sept éléments périphériques répartis en une couche, câble représenté sur la figure 6, conduit à un meilleur coefficient de remplissage en volume que le câble de la figure 5.

Ce résultat peut être justifié par l'explication suivante. On admet qu'il est préférable d'utiliser des câbles à nombre pair de fibres pour simplifier le problème des voies aller et des voies retour. Le coefficient de remplissage a d'un élément est donné par

$$a = 2\frac{E\,\dfrac{2\pi R}{2l}}{\pi R^2} \quad \text{où}$$

$E(x)$ = la partie entière de x
R est le rayon du support de fibres
1 est l'arc minimum occupé par une rainure (soit la largeur de la rainure à la périphérie plus un intervalle entre deux rainures).

On se fixe le diamètre extérieur du câble. A titre d'exemple, on a choisi une valeur comprise entre 13,5 et 14 mm, soit, après mise sous gaine, un diamètre voisin de 15 mm, correspondant à une valeur normalisée par l'administration des P.T.T. en vue d'obtenir la meilleure occupation des conduits normalisés. Le calcul justifie l'utilisation d'un élément de câble de 3,2 mm de diamètre portant dix fibres et l'assemblage 1 + 7 représenté sur la figure 6. Les tolérances mécaniques correspondant à un tel câble sont compatibles avec les procédés d'usinage connus, par exemple ceux décrits par la titulaire dans la demande de brevet déposée le 20 Septembre 1977 pour « Outil d'extrusion » et la demande de brevet européen 78 400233.9 déposée le 12 Décembre 1978.

La valeur minimale de R est en effet fixée par la précision d'usinage des rainures (valeur de 1 et profondeur des rainures) ainsi que le diamètre du support mécanique et la nécessité de conserver, entre le fond des rainures et le support, une certaine épaisseur de revêtement diélectrique. Dans une réalisation particulière de câbles selon l'invention, le diamètre au fond des rainures est maintenu égal au double du diamètre du support mécanique.

La figure 7 est une variante de réalisation de câble comportant deux couches concentriques d'éléments de câble, une première couche centrale de quatre éléments et une couche extérieure de neuf éléments.

La figure 8 est une variante à plus grande échelle de la réalisation de la figure 6 montrant la possibilité d'utiliser les vides entre les éléments de câble à fibres optiques pour y loger des conducteurs métalliques conventionnels, tels des éléments de paires, quartes, 90, 91, etc... servant à la transmission de signaux de service, et/ou à la télé-alimentation des répéteurs. Dans un tel câble, la coloration des éléments auxiliaires peut être utilisée au repérage des éléments de câble constituant le câble. Il est donc inutile de prévoir des moyens de repérage autres que ceux dont il a été fait mention en référence à la figure 4. L'expérience a montré que l'assemblage des éléments de câble à fibres optiques nécessite une torsion de ceux-ci dans une gamme de valeurs correspondant à celle utilisée lors de la pose des fibres optiques dans les rainures des éléments individuels. Il est bien entendu que la nature des protections 60 et 61 entourant le câble dépend essentiellement de l'utilisation de celui-ci. Dans certains cas, il peut être préférable de réaliser au moins l'un des rubanages prévus en 17, 18, à l'aide d'un ruban amianté, en particulier pour les éléments de câble qui constituent la couche extérieure du câble. Le ruban amianté est, de préférence, rubané sur le câble assemblé, avant mise sous enveloppe. L'opération d'assemblage des éléments de câble selon l'invention met en œuvre des machines conventionnelles en câblerie du type câbleuse à détorsion, réglées de façon à obtenir une torsion supérieure à celle servant à compenser le pas d'assemblage et comportant des berceaux convergents, en vue de limiter les efforts exercés sur les éléments de câble au cours de l'opération d'assemblage.

Dans ce qui précède on a décrit des câbles dans lesquels les signaux auxiliaires (télé-alimentation, signalisation, signaux de télémesure, etc...) sont transmis par des conducteurs conventionnels, paires, quartes, etc... Il est bien entendu que dans le cadre de la présente invention, certains ou la totalité de ces signaux peuvent être transmis par les supports des éléments de câble ce qui conduit à réaliser ceux-ci, au moins partiellement, en fils métalliques isolés, en cuivre le plus souvent au lieu de fils d'acier.

**Revendications**

1. Elément de câble à fibres optiques comportant :

— un support mécanique métallique (1) entouré d'un revêtement diélectrique cylindrique (2) portant des rainures hélicoïdales (3),
— au plus une fibre optique (4) dans chaque rainure (3),
— au moins un rubanage hélicoïdal (21) autour du support (1), caractérisé en ce que le profil des rainures (3) est en forme de V curviligne, la concavité des flancs étant dirigée vers la périphérie de sorte que la fibre (4) est maintenue à l'écart du fond de la rainure (3) et ondule entre les flancs de celle-ci.

2. Elément de câble selon la revendication 1, caractérisé en ce que la fibre (4) est soumise à une torsion avant la pose.

3. Elément de câble selon la revendication 1, caractérisé en ce que le profil des rainures (3) est un V d'angle au sommet au plus égal à 60°.

4. Elément de câble selon la revendication 1, caractérisé en ce que la profondeur du V est comprise entre trois et cinq fois le diamètre de la fibre (4).

5. Elément de câble selon la revendication 1, caractérisé en ce que le revêtement diélectrique (2) comporte deux entailles (23, 24) situées sur deux diamètres différents servant au repérage des fibres (4).

6. Elément de câble selon la revendication 1, caractérisé en ce que le revêtement diélectrique (2) a un diamètre tel que le diamètre mesuré au fond des rainures (3) est égal au double du diamètre de support mécanique (1).

7. Utilisation d'éléments de câble selon la revendication 1 pour fabriquer un câble comportant un élément central (51) posé en long entouré d'au moins une couche d'éléments (52, 53) câblés uniformément autour de l'élément central (51) avec un pas d'assemblage compris entre deux et cinq fois le pas des rainures hélicoïdales (3), entourés d'un ruban servant d'écran, d'une enveloppe métallique (60) soudée en long et d'une gaine de protection (61).

8. Utilisation selon la revendication 7, caractérisée en ce que les éléments (52, 53) portent chacun dix fibres (4) et la première couche comporte sept éléments (52, 53).

9. Utilisation selon l'une des revendications 7 et 8, caractérisée en ce que le câble comporte une pluralité de conducteurs métalliques (90, 91) servant à la transmission de signaux auxiliaires.

10. Utilisation selon l'une des revendications 7 et 8, caractérisée en ce que les supports métalliques (1) des éléments (52, 53) comportent des conducteurs isolés participant à la transmission des signaux auxiliaires.

## Ansprüche

1. Kabelelement mit Lichtleitfasern mit einem aus Metall bestehenden mechanischen Träger (1), der mit einem zylindrischen dielektrischen Überzug (2) versehen ist, in dem schraubenlinienförmige Nuten (3) angebracht sind, wenigstens einer Lichtleitfaser (4) in jeder Nut (3) und wenigstens einer schraubenlinienförmigen Umwicklung (21) um den Träger (1), dadurch gekennzeichnet, daß die Nuten (3) ein gekrümmtes V-Profil haben, wobei die Nutflanken derart konkav gegen den Umfang verlaufen, daß die Lichtleitfaser (4) im Abstand vom Boden der Nut (3) gehalten wird und wellenförmig zwischen den Flanken der Nut verläuft.

2. Kabelelement nach Anspruch 1, dadurch gekennzeichnet, daß die Lichtleitfaser (4) vor der Anbringung verdrillt wird.

3. Kabelelement nach Anspruch 1, dadurch gekennzeichnet, daß das Profil der Nuten (3) die Form eines V mit einem Scheitelwinkel von wenigstens 60° hat.

4. Kabelelement nach Anspruch 1, dadurch gekennzeichnet, daß die Tiefe des V-Profils zwischen drei- und fünfmal so groß wie der Durchmesser der Lichtleitfaser (4) ist.

5. Kabelelement nach Anspruch 1, dadurch gekennzeichnet, daß der dielektrische Überzug (2) zwei Einschnitte (23, 24) aufweist, die an zwei verschiedenen Durchmessern liegen und als Bezugsmarkierungen für die Lichtleitfasern (4) dienen.

6. Kabelelement nach Anspruch 1, dadurch gekennzeichnet, daß der dielektrische Überzug (2) einen solchen Durchmesser hat, daß der am Boden der Nuten (3) gemessene Durchmesser doppelt so groß wie der Durchmesser des mechanischen Trägers (1) ist.

7. Verwendung des Kabelelements nach Anspruch 1 zur Herstellung eines Kabels mit einem in Längsrichtung angeordneten Mittelelement (51), das von wenigstens einer Schicht aus Elementen (52, 53) umgeben ist, die mit einer zwischen der zwei- und fünffachen Schlaglänge der schraubenlinienförmigen Nuten (3) liegenden Schlaglänge gleichmäßig um das Mittelelement (51) verseilt sind und von einem als Abschirmung dienenden Band, einer in Längsrichtung verschweißten metallischen Hülle (60) und einem Schutzmantel (61) umgeben sind.

8. Verwendung nach Anspruch 7, dadurch gekennzeichnet, daß die Elemente (52, 53) jeweils zehn Lichtleitfasern (4) tragen, und daß die erste Schicht sieben Elemente (52, 53) enthält.

9. Verwendung nach Anspruch 7 oder 8, dadurch gekennzeichnet, daß das Kabel mehrere aus Metall bestehende Leiter (90, 91) enthält, die der Übertragung von Hilfssignalen dienen.

10. Verwendung nach Anspruch 7 oder 8, dadurch gekennzeichnet, daß die aus Metall bestehenden Träger (1) der Elemente (52, 53) isolierte Leiter enthalten, die an der Übertragung von Hilfssignalen beteiligt sind.

## Claims

1. Cable element comprising optical fibres having a mechanical support (1) which consists of metal and which is provided with a cylindrical dielectric coating (2) in which helical grooves (3) are formed, at least one optical fibre (4) in each groove (3) and at least one helical wrapping (21) about the support (1), characterized in that the grooves (3) have a curved V profile, the groove flanks extending concavely with respect to the periphery in such a manner that the optical fibre (4) is held spaced from the bottom of the groove (3) and extends in undulate manner between the flanks of the groove.

2. Cable member according to claim 1, characterized in that the optical fibre (4) is twisted prior to application.

3. Cable member according to claim 1, characterized in that the profile of the groove (3) has the form of a V with an apex angle of at least 60°.

4. Cable member according to claim 1, characterized in that the depth of the V profile is between three and five times as great as the diameter of the optical fibre (4).

5. Cable member according to claim 1, characterized in that the dielectric coating (2) comprises two notches (23, 24) which are at different diameters and serve as reference markings for the optical fibres (4).

6. Cable member according to claim 1, characterized in that the dielectric coating (2) has such a diameter that the diameter measured at the bottom of the grooves (3) is twice as large as the diameter of the mechanical support (1).

7. Use of the cable member according to claim 1 for making a cable comprising a centre element (51) which is disposed in the longitudinal direction and which is surrounded by at least one layer of elements (52, 53) which are stranded uniformly round the centre element (51) with a lay length which lies between two and five times the lay length of the helical grooves (3) and are surrounded by a tape serving as shield, a metallic sleeve (60) welded in the longitudinal direction and a protection cover (61).

8. Use according to claim 7, characterized in that the elements (52, 53) each carry ten optical fibres (4) and that the first layer comprises seven elements (52, 53).

9. Use according to claim 7 or 8, characterized in that the cable includes a plurality of conductors (90, 91) which consist of metal and which serve to transmit auxiliary signals.

10. Use according to claim 7 or 8, characterized in that the metal supports (1) of the elements (50, 53) contain insulated conductors which participate in the transfer of auxiliary signals.

Fig. 1

Fig. 2

Fig. 3

Fig. 4

Fig. 5

Fig. 6

Fig. 7

0 004 486

4/5

5/5

Fig. 8